# EUROPEAN PATENT SPECIFICATION

(11) **EP 3 889 551 B1**
(45) Date of publication and mention of the grant of the patent: **11.10.2023**
(21) Application number: 20167394.4
(22) Date of filing: 31.03.2020
(51) Int. Cl.: G01F 1/06, G01F 1/10

(54) **A DOUBLE SIDED INTEGRATED BEARING SLEEVE**
EINE BEIDSEITIG INTEGRIERTE LAGERBUCHSE
MANCHON DE PALIER INTÉGRÉ À DOUBLE FACE

(43) Date of publication of application: 06.10.2021
(73) Proprietor: Apator Powogaz Spolka Akcyjna, 62 023 Zerniki (PL)
(72) Inventor: Zarzynski, Mikolaj, 61 - 294 Poznan (PL)
(74) Representative: Wroblewski, Marcin Jan

(56) References cited:
- EP-A1- 1 031 819
- EP-A2- 0 764 832
- CN-U- 201 653 455
- JP-U- S55 106 825

## Description

### Field of the Invention

The object of the invention is a bearing sleeve for connecting to the rotor of flow meters.

### Description of Prior Art

Flow meters are known which are adapted to measure fluids (liquid substances, liquids or gases) and divided by means of a sealing plate into a wet through part and a dry closed part. A measuring rotor is bearing seated in the wet space of the flow meter. The rotor is seated in the flow meter by means of a bearing system consisting of two axes, an upper sleeve, a lower sleeve and two jewels.

A water meter is known from the Polish utility model PL67445Y1, which consists of a body made of a non-magnetic material, in which a wet through part is formed, in which the measuring rotor is bearing seated. The wet part is separated by means of a sealing plate from the dry space located outside of the body, in which a counter is placed. This water meter comprises a bearing system consisting of upper and lower sleeves, two bearing axles/pins and two jewels.

From the Polish patent PL176525B1, a vane water meter is known, equipped with a body tightly closed with a cover attached by means of a threaded ring. Below the cover, a wet chamber is formed in the body. In the chamber, a bearing sleeve of the rotor is bearing seated through rotational mounting on the bearing pin. The sleeve is mounted in the through hole of the rotor. The bearing sleeve is provided with a blind hole in which the bearing pin is seated. The bearing pin is uniform and seated in a permanently straight-through manner in the cover, and its axle is perpendicular to the direction of water flow. In addition, its part, on which a vane rotor is bearing seated by means of the bearing sleeve, provided with a journal, is exactly coaxial with the part located in the dry chamber, on which a drive element of the rotation counter of the vane rotor is seated. For permanent connection with the cover, the surface of the central part of the axle fixed therein is profiled, most preferably having several annular grooves.

From the US Patent Application US5466126A, a rotor for fluid meters is known which is provided with a cylindrical bearing which is the central element engaging with the pin. The bearing comprises, on the periphery of a central recess, open grooves with adjacent grooves separated by ribs and axial channels arranged around the groove. Each of the channels cooperates with at least one groove so as to facilitate the flow of fluid through the said channel.

From the European patent EP2720004B1, a flowmeter is known containing a centring bearing which has, in its longitudinal channel, at least two cylindrical walls centring a longitudinal support of the rotation axle, wherein the rotation axle is placed in such a way that it contacts the centring bearing on one cylindrical wall centring the longitudinal support in an upper position, and on the other cylindrical wall centring the longitudinal support, with a different cross-section, in a lower position. The turbine body consists of blades, a sleeve placed and fixed inside the turbine body, wherein the rotation axle is permanently mounted inside the sleeve, and the sleeve rests longitudinally by means of an external upper surface on a first upper axial stop in the upper position.

From the European patent application EP0764832A2, a double-sided integrated bearing sleeve connected to the rotor of a flowmeter is known. The integrated bearing sleeve comprises connected to each other along the same axis a lower part in the shape of a ring with a lower inlet-outlet, a central part in the shape of two concentric rings axially connected to each other and an upper part in the shape of a ring smaller in diameter than the lower part. The lower part is adapted for radial bearing of a first axle. The central part comprising two symmetrical lateral inlets-outlets and a cylindrical thrust bearing. The central part is adapted to simultaneously bear the first axle and a second axle. The upper part comprises an upper inlet-outlet and it is adapted for radial bearing of the second axle. EP0764832A2 solves the problem of assembly of the bearing system while maintaining high bearing quality.

At present, the prior art presents solutions in which the bearing systems consist of several independent elements. During operation, these elements are unevenly loaded, the assembly process is multi-stage and there is a need for additional protection of the sleeve against loosening, e.g. by welding. Often, it is also necessary to use bearing stones. Bearing stones, usually made of synthetic sapphire, accelerate the wear of axles made of stainless steel, which makes it difficult to maintain adequate durability of the bearing systems in the long run. The destruction of the axles causes a rapid increase in the axial clearance of the rotor, which causes the occurrence of further adverse phenomena in bearing systems, such as impact destruction of bearings.

The small size of the elements found in the prior art bearing systems makes it difficult to maintain their dimensioning accuracy. What is more, the multitude of elements significantly extends dimension chains, which in turn makes it difficult to maintain control, in the technological process, over the dimensional rigour of these elements. This is a problem both in the case of maintaining optimal axial clearance and radial tolerances in the said bearing systems.

In addition, the need to fit the entire bearing system, in meters with magnetic coupling, inside the magnet ring means that the upper bearing sleeves have very small dimensions. Walls of the sleeve are less than 1 mm thick. This makes them the most sensitive elements of the mentioned bearing system in terms of durability.

In the solutions known from the prior art, there is also a need to vent and properly lubricate the bearing system. Closed spaces of slide bearings tend to get air-locked, and when operating dry they wear out many times faster than according to technological assumptions. Stainless steel axles operating in air-locked sleeves tend to corrode due to abrasion of the passivated layer.

Water in this type of bearing acts as a lubricant, but it also causes the accumulation of dirt. Mineral deposits that occur naturally in drinking water are the most dangerous. Their significant accumulation can, in extreme cases, lead to the stoppage of the water meter.

In bearing systems known form the prior art, often, there are also rotating elements. Due to the fact that such systems are usually made of plastics, the problem is also the susceptibility of these elements to frictional wear. A system in which the rotating element is a hard axle and the stationary element is a relatively soft sleeve is extremely unfavourable in terms of durability.

In addition, in prior art solutions, the high centre of gravity of the rotor adversely affects the metrology of the flow meter, e.g. a water meter mounted in a vertical installation position.

Therefore, it is expedient to develop a bearing solution that would improve existing solutions and would not have the above disadvantages.

### The Essence of the Invention

The object of the invention is a double-sided, monolithic bearing sleeve for connecting to the rotor of flow meters. Its structure is characterised by the fact that it contains three - lower, central and upper - parts. The lower part, with a lower inlet-outlet, has the shape of a ring and is adapted for radial bearing of a first axle. The central part is in the shape of two concentric rings and contains at least two symmetrical radially positioned inlets-outlets, as well as a thrust bearing which is cylindrical. The thrust bearing is adapted for bearing of both the first and the second axle. The upper part, which is also in the shape of a ring, with the difference that its diameter is smaller than the diameter of the lower part, contains an upper inlet-outlet. The upper part is adapted for radial bearing of the second axle.

In the sleeve according to the invention, the number of elements of the bearing system is reduced, which positively affects the dimensional accuracy.

Use of the sleeve according to the invention allows improvement of durability parameters of the bearing system. What is more, for selected configurations of bearing systems, it also eliminates the need to ensure proper angular orientation of bearing system elements, which greatly facilitates the assembly process.

It is preferred that the thrust bearing be terminated on both sides with concave meniscus.

Use of the concave meniscus significantly improves axle centring in the bearing system.

Preferably, the lower inlet-outlet and the radially positioned inlets-outlets of the bearing sleeve are interconnected to allow free flow of fluid.

Preferably, the radially positioned inlets-outlets are interconnected with the upper inlet-outlet, thereby allowing free flow of fluid.

Preferably, the lower inlet-outlet, the radially positioned inlets-outlets and the upper inlet-outlet are interconnected in such a way that allows free flow of fluid.

The free flow of fluid prevents accumulation of dirt, in particular mineral deposits, in the sleeve, which consequently increases its durability and prevents possible blockage of the bearing system.

The free flow of fluid improves venting of the bearing system.

Preferably, the bearing sleeve according to the invention is made of a plastic filled with an admixture of 10 to 60% by weight of glass balls or fibreglass balls, or carbon balls.

The object of the invention is also a bearing system which comprises a bearing sleeve, a first axle and a second axle. The first axle is adapted to be seated with its first end in the lower part of the bearing sleeve. In turn, the second axle is adapted to be seated with its first end in the upper part of the bearing sleeve.

In the bearing system according to the invention, there are two axles and one monolithic sleeve produced in the process of plastic injection molding. The sleeve has been designed in such a way that its injection process does not require the use of moulds equipped with elastic elements. The punch and the die do not interfere with each other, thereby allowing free lowering of the part from the injection mould. Consequently, it becomes possible to reduce shape deviations and to tighten dimensional requirements.

In prior art solutions, bearing systems comprise six independent elements (two axles, two sleeves and two jewels), in the bearing system according to the invention the number of components is reduced by 50% (one sleeve and two axles). The stepped structure of the sleeve constitutes a natural protection against spontaneous slipping out of the bearing seat during operation. At the same time, it is not necessary to weld the system elements.

Preferably, the bearing system is characterised in that the second axle is also adapted to be seated with its second end in the sealing plate of the flow meter.

Preferably, in the bearing system, the first axle is adapted to be seated with its second end in the body of the flow meter.

Preferably, the first and/or the second axle in the bearing system are made of stainless steel or cemented carbides, or cobalt alloys.

The object of the invention is also a flow meter comprising the bearing system according to the invention.

Preferably, the flow meter is adapted to measure water or gas flow.

### Advantages of the invention

The solution according to the invention reduces the number of components necessary for the construction of the bearing system by half, which results in increased dimensional accuracy of individual elements and significantly facilitates control over dimensional rigour in the technological process.

What is more, the sleeve according to the invention has been designed in such a way that its injection process does not require the use of moulds equipped with elastic elements. Consequently, it becomes possible to reduce shape deviations and to tighten dimensional requirements.

The solution according to the invention simplifies the assembly of individual parts of the described bearing system, and thus also of the flow meter itself containing this system. The stepped structure of the sleeve constitutes a natural protection against spontaneous slipping out of the bearing seat during operation. There is not any need for welding, either.

For selected configurations of bearing systems, the present solution also improves the centring of the axles of these systems without any need to use additional elements in the system.

The solution according to the invention provides for the possibility of free flow of fluid in the sleeve, thanks to which it is possible to remove residual air fractions and impurities, in particular mineral deposits, accumulated during operation.

In addition, the solution according to the invention ensures greater durability of the elements of the bearing system, since the rotating element is not any longer a hard axle, but a relatively soft, plastic sleeve.

The solution according to the invention does not use jewels, either, which also increases the durability of the bearing system and eliminates phenomena such as impact destruction of bearings. In addition, lighter components allow the elimination of axial forces in the bearings at low flow rates.

### Description of Figures in the Drawing

The object of the invention is shown in embodiments in a drawing, in which:

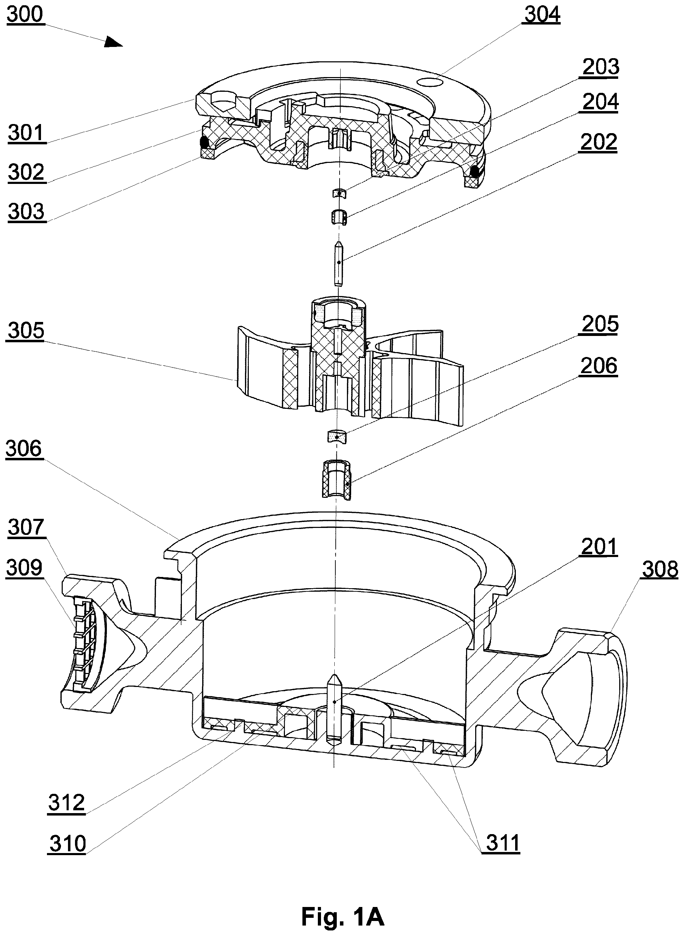

Fig. 1A is a cross-section of a flow meter known in the prior art in an exploded view.

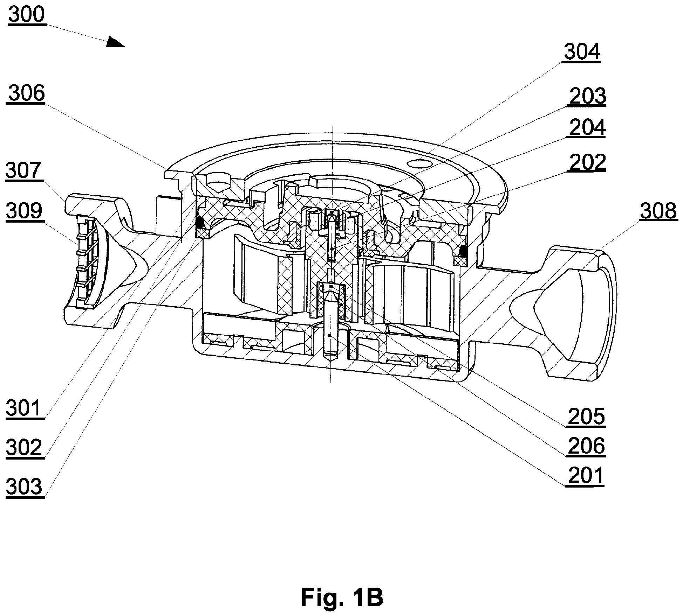

Fig. 1B is a cross-section of the flow meter known in the prior art in a perspective view.
Fig. 2A shows a first embodiment of a double-sided monolithic bearing sleeve according to the invention in a bottom view.
Fig. 2B shows the first embodiment of the double-sided monolithic bearing sleeve according to the invention in a front view.
Fig. 2C shows the first embodiment of the double-sided monolithic bearing sleeve according to the invention in a top view.
Fig. 2D shows the first embodiment of the double-sided monolithic bearing sleeve according to the invention in a perspective view.
Fig. 2E shows the first embodiment of the double-sided monolithic bearing sleeve according to the invention in a cross-section.
Fig. 3 shows a second embodiment of the double-sided monolithic bearing sleeve in a cross-section.
Fig. 3A shows the second embodiment of the double-sided monolithic bearing sleeve according to the invention in a sectional perspective view with a diagram of fluid flow in the sleeve.
Fig. 4A shows a third embodiment of the double-sided monolithic bearing sleeve according to the invention in a bottom view.
Fig. 4B shows the third embodiment of the double-sided monolithic bearing sleeve according to the invention in a front view.
Fig. 4C shows the third embodiment of the double-sided monolithic bearing sleeve according to the invention in a top view.
Fig. 4D shows the third embodiment of the double-sided monolithic bearing sleeve according to the invention in a perspective view.
Fig. 5A shows a fourth embodiment of the double-sided monolithic bearing sleeve according to the invention in a bottom view.
Fig. 5B shows the fourth embodiment of the double-sided monolithic bearing sleeve according to the invention in a front view.
Fig. 5C shows the fourth embodiment of the double-sided monolithic bearing sleeve according to the invention in a top view.
Fig. 5D shows the fourth embodiment of the double-sided monolithic bearing sleeve according to the invention in a perspective view.
Fig. 6A shows a cross-section of a flow meter that comprises the bearing system according to the invention in an exploded view.
Fig. 6B shows a cross-section of the flow meter that comprises the bearing system according to the invention in a perspective view.

### Description of the Invention

### Bearing sleeve

### First embodiment

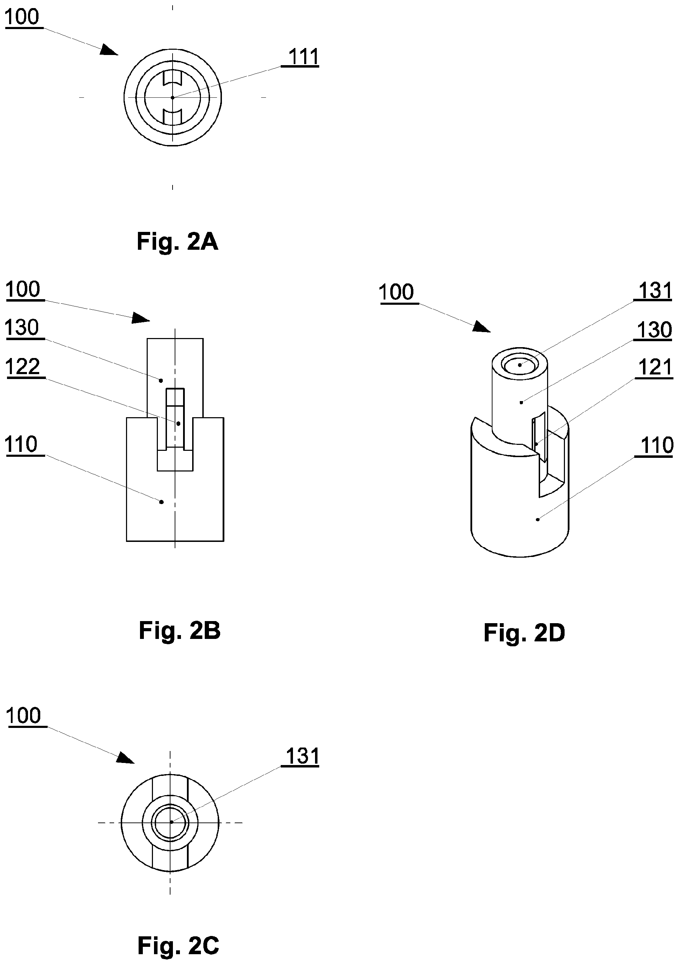

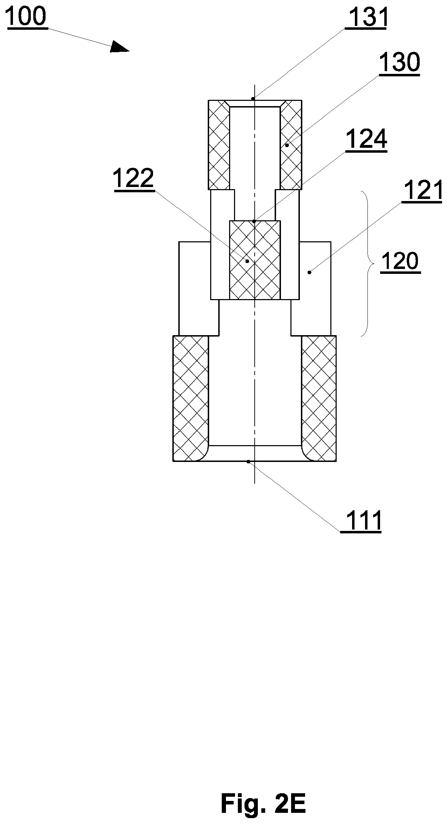

A double-sided monolithic bearing sleeve 100 shown in Figs. 2A-E comprises three - lower 110, central 120 and upper 130 - parts.

The lower part is ring-shaped and has a lower inlet-outlet and is adapted for radial bearing of a first axle 201.

The central part 120 has the shape of two concentric rings. The central part 120 comprises two symmetrical inlet-outlets 121 and a cylindrical thrust bearing 122 terminated on both sides with a flat surface 124, which is adapted for simultaneously bearing of the first axle 201 and a second axle 202.

The upper part 130 is also ring-shaped, with the diameter of the upper part 130 being smaller than the diameter of the lower part 110. The upper part 130 comprises an upper inlet-outlet 131 and is adapted for radial bearing of the second axle 202.

What is more, in the bearing sleeve 100, the lower inlet-outlet 111, the radially positioned inlets-outlets 121 and the upper inlet-outlet 131 are connected to each other in such a way that free flow of fluid through the sleeve 100 is possible. This allows proper operation of slide bearings and removal of air and impurities, in particular mineral deposits, being accumulated during operation of a flow meter 300, which allows improvement of durability parameters of a bearing system 200. The bearing sleeve 100 is a rotating element as it is intended to operate in a rotor, which enhances the above-mentioned effects. The structure of the sleeve 100 also eliminates the need to ensure proper angular orientation, which greatly facilitates the assembly process.

The bearing sleeve 100 according to the invention is made of a plastic, for example polyamide, polyphenylene sulphide, polyacetal, liquid crystal polymers or Teflon, wherein said materials can be filled with an admixture of 10% to 60% of glass balls or fibreglass balls, or carbon fibre balls.

### Second embodiment

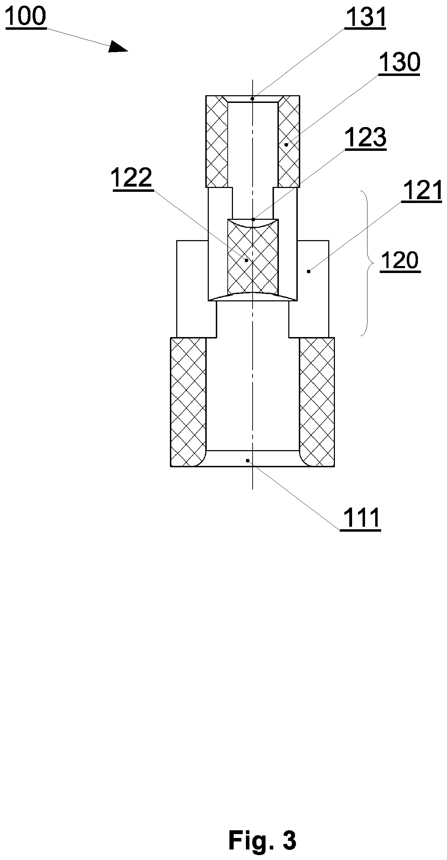

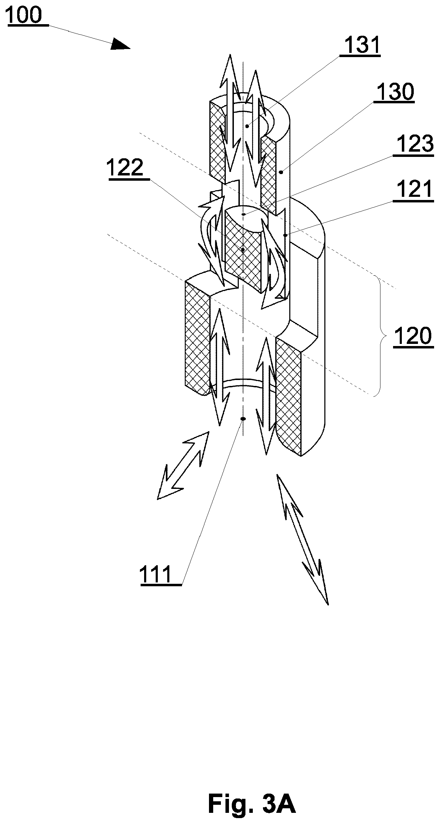

In Figs. 3 A-B, the bearing sleeve 100 according to the second embodiment is shown. Its structure is identical to the first embodiment, except that the thrust bearing 122 is terminated on both sides with concave meniscus 123. Use of the concave meniscus 123 significantly improves centring of the first axle 201 and the second axle 202 in the bearing system 200.

### Third embodiment

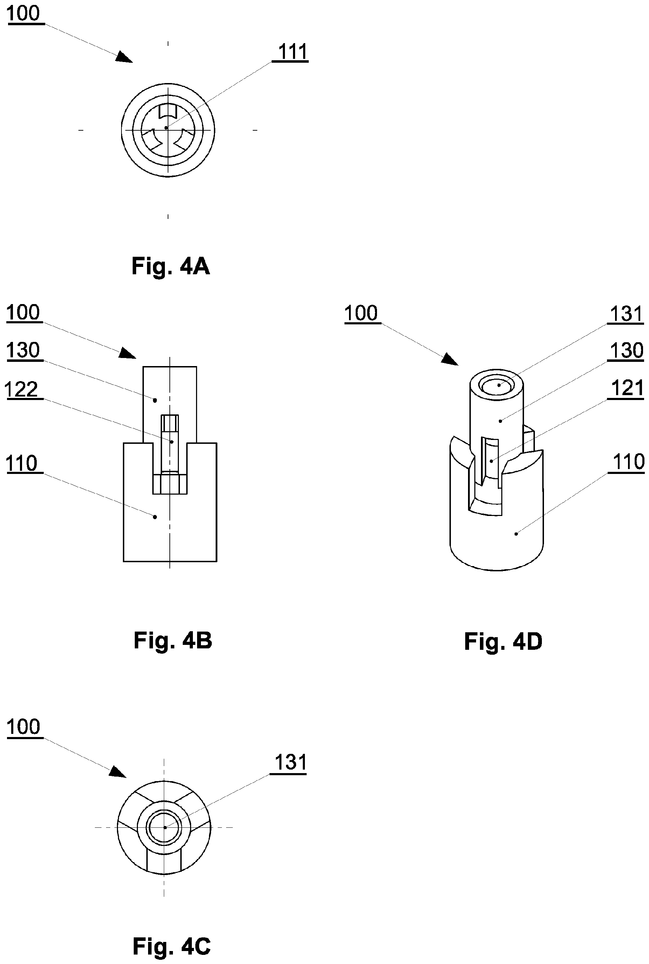

The bearing sleeve 100 according to the third embodiment (Figs. 4A-D) is identical to the first embodiment, except that the central part 120 comprises three symmetrical inlets-outlets 121.

In this embodiment, it is also possible to use the concave meniscus 123 on both sides of the thrust bearing 122, which is located in the central part 120 of the bearing sleeve 100, as in the second embodiment.

### Fourth embodiment

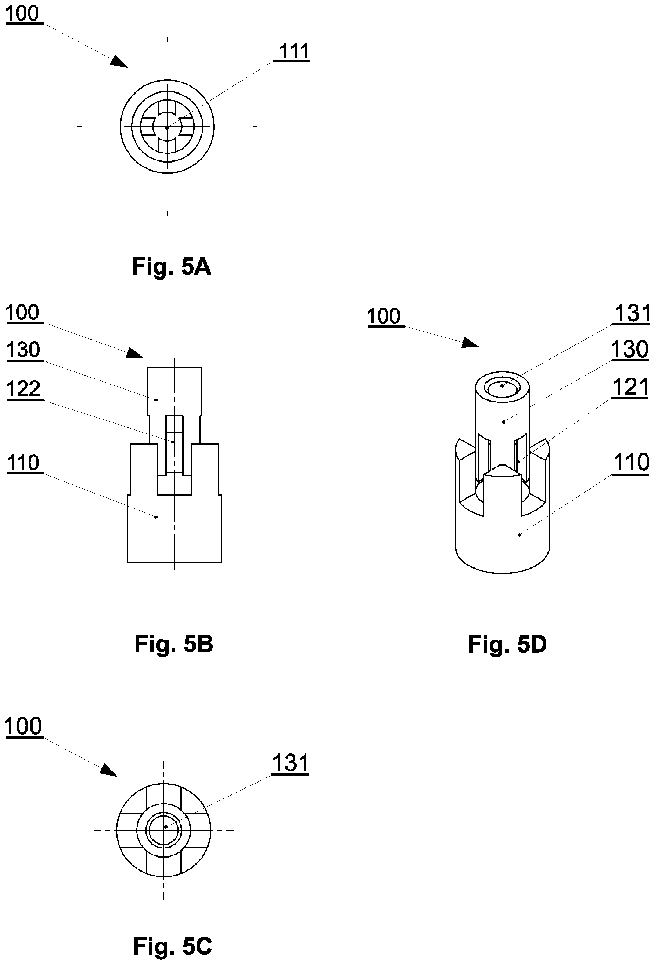

The bearing sleeve 100 according to the fourth embodiment (Figs. 5A-D) is identical to the first embodiment, except that the central part 120 comprises four symmetrical inlets-outlets 121.

In this embodiment, it is also possible to use the concave meniscus 123 on both sides of the thrust bearing 122, which is located in the central part 120 of the bearing sleeve 100, as in the second embodiment.

### Bearing system

A bearing system 200 according to the invention comprises the bearing sleeve 100 according to the first embodiment, the first axle 201 and the second axle 202.

The first axle 201 is adapted to be seated with its first end in the lower part 110 of the bearing sleeve 100 and with its second end in a body 306 of the flow meter 300.

In turn, the second axle 202 is adapted to be seated with its first end in the upper part 130 of the bearing sleeve 100 and with its second end in a sealing plate 302 of the flow meter 300.

What is more, the first axle 201 and/or the second axle 202 can be made of stainless steel or cemented carbides, or cobalt alloys. It is also possible to use other materials, the common characteristic of which is high corrosion resistance and abrasion resistance.

The bearing system 200 may also comprise the bearing sleeve 100 according to the second, third and fourth embodiments.

### Flow meter

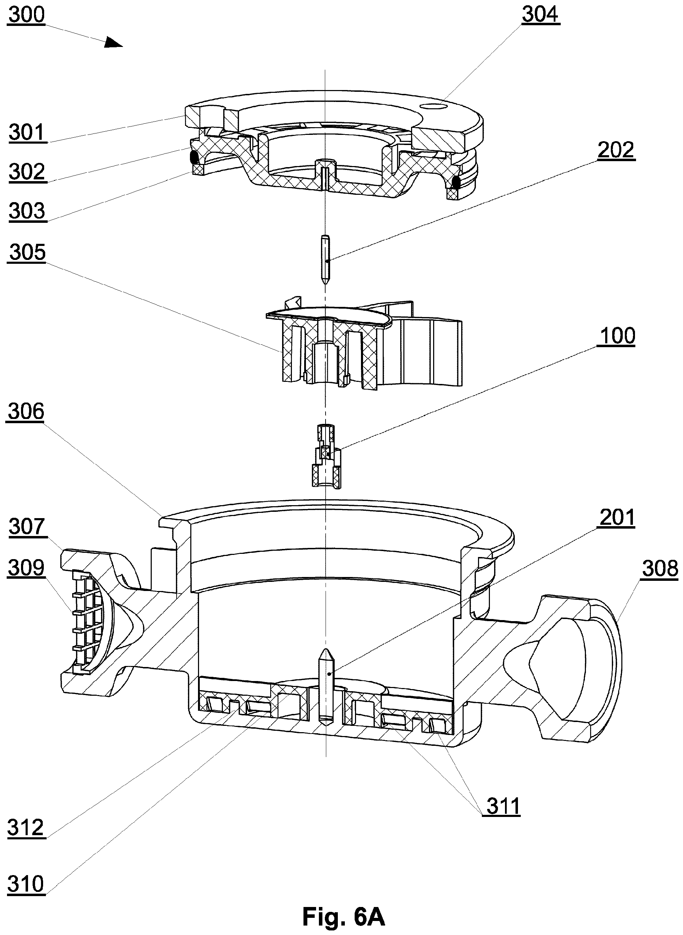

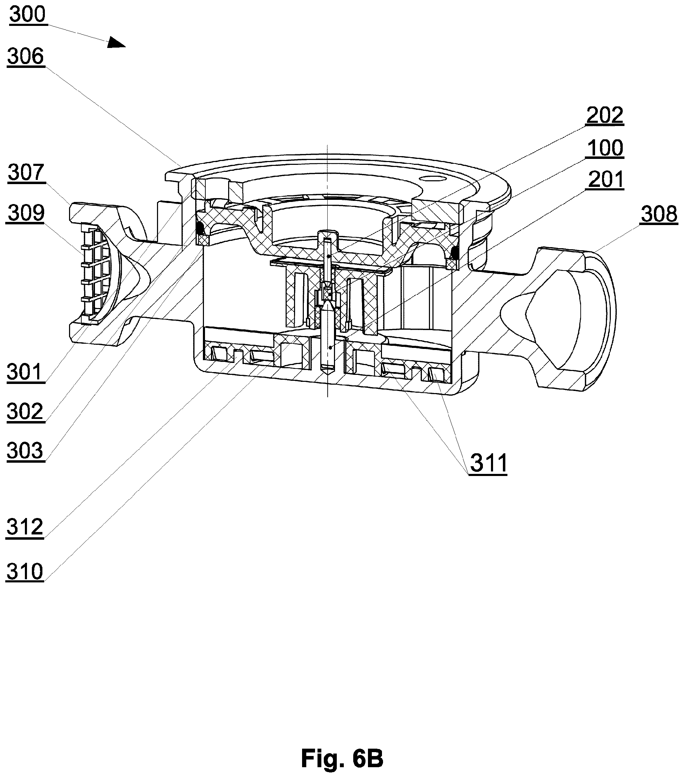

A flow meter 300 according to the invention, shown in Fig. 6A-B, comprises an upper part which in turn comprises a pressure ring 301, a sealing plate 302, a slide ring 303, a hole for an assembly jig 304 in the pressure ring 301. The said flow meter also comprises a lower part which further comprises: a body 306, an inlet 307, an outlet 308, a strainer 309 in the inlet 307, technological spaces 311 in a dam plate and a basing ring 312 of the dam plate 310 and a rotor 305 which is seated in the flow meter 300 by means of the bearing system 200 comprising the bearing sleeve 100.

What is more, the flow meter 300 is adapted to measure water or gas flow.

### List of reference numerals

- 100: - double-sided bearing sleeve
- 110: - lower part of the sleeve
- 120: - central (bearing) part of the sleeve
- 130: - upper part of the sleeve
- 111: - lower inlet-outlet
- 121: - radially positioned inlet-outlet
- 122: - thrust bearing
- 123: - concave meniscus
- 124: - flat surface of the thrust bearing
- 131: - upper inlet-outlet
- 200: - bearing system
- 300: - flow meter
- 301: - pressure ring
- 302: - sealing plate
- 303: - slide ring
- 304: - hole for an assembly jig
- 305: - rotor
- 203: - upper jewel
- 204: - upper sleeve
- 202: - axle of the sealing plate (second axle)
- 205: - lower jewel
- 206: - lower sleeve
- 201: - main axle (first axle)
- 306: - body
- 307: - inlet
- 308: - outlet
- 309: - strainer
- 310: - dam plate
- 311: - technological spaces in the dam plate
- 312: - dam plate basing ring

## Claims

1. A double-sided monolithic bearing sleeve (100) for connecting to the rotor of flow meters, comprising÷
- a lower part (110) in the shape of a ring, with a lower inlet-outlet (111), adapted for radial bearing of a first axle (201);
- a central part (120) in the shape of two concentric rings, comprising at least two symmetrical radially positioned inlets-outlets (121), a cylindrical thrust bearing (122) adapted for simultaneously bearing the first axle (201) and a second axle (202);
- an upper part (130) in the shape of a ring, smaller in diameter than the lower part (110), comprising an upper inlet-outlet (131), adapted for radial bearing of the second axle (202).

2. The bearing sleeve (100) according to claim 1, wherein the thrust bearing (122) is terminated on both sides with concave meniscus (123).

3. The bearing sleeve (100) according to claim 1, wherein
- the lower inlet-outlet (111),
- the radially positioned inlets-outlets (121)
are interconnected in such a way that they allow free flow of fluid.

4. The bearing sleeve (100) according to claim 1, wherein
- the radially positioned inlets-outlets (121),
- the upper inlet-outlet (131),
are interconnected in such a way that they allow free flow of fluid.

5. The bearing sleeve (100) according to claim 1, wherein
- the lower inlet-outlet (111),
- the radially positioned inlets-outlets (121),
- the upper inlet-outlet (131)
are interconnected in such a way that they allow free flow of fluid.

6. The bearing sleeve (100) according to any one of the preceding claims, made of a plastic.

7. The bearing sleeve (100) according to claim 6, made of a plastic filled with an admixture of 10 to 60% by weight of glass balls or fibreglass balls, or carbon fibre balls.

8. A bearing system (200), comprising:
- the bearing sleeve (100) according to any one of claims 1 to 7;
- the first axle (201), adapted to be seated with its first end in the lower part (110) of the bearing sleeve (100);
- the second axle (202), adapted to be seated with its first end in the upper part (130) of the bearing sleeve (100);

9. The bearing system (200) according to claim 8, wherein the second axle (202) is adapted to be seated with its second end in a sealing plate (302) of a flow meter (300).

10. The bearing system (200) according to claim 9, wherein the first axle (201) is adapted to be seated with its second end in a body (306) of the flow meter (300).

11. The bearing system (200) according to claims 8 to 10, wherein the first axle (201) and/or the second axle (202) are made of stainless steel or sintered carbides, or cobalt alloys.

12. A flow meter (300) comprising the bearing system (200) according to any one of claims 8 to 11.

13. The flow meter (300) according to claim 12, adapted to measure water or gas flow.

## Patentansprüche

1. Doppelseitige monolithische Lagerhülse (100) für den Anschluss an den Rotor von Durchflussmessern, die Folgendes umfasst:
- einen unteren Teil (110) in Form eines Rings, mit einem unteren Einlass-Auslass (111), geeignet zur radialen Lagerung einer ersten Achse (201);
- einen zentralen Teil (120) in Form zweier konzentrischer Ringe, der mindestens zwei symmetrisch angeordnete radiale Einlässe-Auslässe (121) aufweist,
- ein zylindrisches Axiallager (122), das zur gleichzeitigen Lagerung der ersten Achse (201) und einer zweiten Achse (202) geeignet ist;
- einen oberen Teil (130) in Form eines Rings, der einen kleineren Durchmesser als der untere Teil (110) hat und einen oberen Einlass-Auslass (131) aufweist, der für die radiale Lagerung der zweiten Achse (202) geeignet ist.

2. Lagerhülse (100) nach Anspruch 1, wobei das Axiallager (122) auf beiden Seiten mit einem konkaven Meniskus (123) abgeschlossen ist.

3. Die Lagerhülse (100) nach Anspruch 1, wobei
- er untere Einlass-Auslass (111),
- die radial angeordneten Einlässe-Auslässe (121)
so miteinander verbunden sind, dass sie einen freien Durchfluss des Fluids ermöglichen.

4. Die Lagerhülse (100) nach Anspruch 1, wobei
- die radial angeordneten Einlässe-Auslässe (121),
- der obere Einlass-Auslass (131),
so miteinander verbunden sind, dass sie einen freien Durchfluss des Fluids ermöglichen.

5. Die Lagerhülse (100) nach Anspruch 1, wobei
- der untere Einlass-Auslass (111),
- die radial angeordneten Einlässe-Auslässe (121),
- der obere Einlass-Auslass (131)
so miteinander verbunden sind, dass sie einen freien Durchfluss des Fluids ermöglichen.

6. Die Lagerhülse (100) nach einem der vorhergehenden Ansprüche, hergestellt aus einem Kunststoff.

7. Die Lagerhülse (100) nach Anspruch 6, hergestellt aus einem Kunststoff, der mit einer Beimischung von 10 bis 60 Gew.-% Glas- oder Glasfaserkugeln oder Kohlefaserkugeln gefüllt ist.

8. Ein Lagersystem (200), das Folgendes umfasst:
- die Lagerhülse (100) nach einem der Ansprüche 1 bis 7;
- die erste Achse (201), die mit ihrem ersten Ende in den unteren Teil (110) der Lagerhülse (100) eingesetzt werden kann;
- die zweite Achse (202), die mit ihrem ersten Ende in den oberen Teil (130) der Lagerhülse (100) eingesetzt werden kann;

9. Das Lagersystem (200) nach Anspruch 8, wobei die zweite Achse (202) mit ihrem zweiten Ende in einer Dichtungsplatte (302) eines Durchflussmessers (300) gelagert werden kann.

10. Das Lagersystem (200) nach Anspruch 9, wobei die erste Achse (201) mit ihrem zweiten Ende in einem Gehäuse (306) eines Durchflussmessers (300) gelagert werden kann.

11. Das Lagersystem (200) nach einem der Ansprüche 8 bis 10, wobei die erste Achse (201) und/oder die zweite Achse (202) aus rostfreiem Stahl oder gesinterten Karbiden oder Kobaltlegierungen hergestellt sind.

12. Ein Durchflussmessgerät (300) mit dem Lagersystem (200) nach einem der Ansprüche 8 bis 11.

13. Das Durchflussmesser (300) nach Anspruch 12, geeignet zum Messen von Wasser- oder Gasdurchfluss.

## Revendications

1. Douille de roulement monolithique à double face (100) pour le raccordement au rotor de débitmètres, comprenant :
- une partie inférieure (110) en forme d'anneau, avec une entrée-sortie inférieure (111), adaptée pour le support radial d'un premier essieu (201) ;
- une partie centrale (120) en forme de deux anneaux concentriques, comprenant au moins deux entrées-sorties symétriques positionnées radialement (121),
- un palier de butée cylindrique (122) adapté pour supporter simultanément le premier essieu (201) et un deuxième essieu (202) ;
- une partie supérieure (130) en forme d'anneau, de diamètre inférieur à la partie inférieure (110), comprenant une entrée-sortie supérieure (131), adaptée au roulement radial du deuxième essieu (202).

2. Le douille de roulement (100) selon la revendication 1, dans lequel le palier de butée (122) est terminé des deux côtés par un ménisque concave (123).

3. Manchon de roulement (100) selon la revendication 1, dans lequel
- l'entrée-sortie inférieure (111),
- les entrées-sorties radiales (121)
sont interconnectés de manière à permettre la libre circulation des fluides.

4. Manchon de roulement (100) selon la revendication 1, dans lequel
- les entrées-sorties radialement positionnées (121),
- l'entrée-sortie supérieure (131),
sont interconnectés de manière à permettre la libre circulation des fluides.

5. Manchon de roulement (100) selon la revendication 1, dans lequel
- l'entrée-sortie inférieure (111),
- les entrées-sorties radialement positionnées (121),
- l'entrée-sortie supérieure (131)
sont interconnectés de manière à permettre la libre circulation des fluides.

6. Manchon de roulement (100) selon l'une quelconque des revendications précédentes, réalisé en matière plastique.

7. Manchon de roulement (100) selon la revendication 6, constitué d'un plastique rempli d'un mélange de 10 à 60% en poids de billes de verre ou de billes de fibre de verre, ou de billes de fibre de carbone.

8. Système de roulement (200) comprenant
- le manchon de roulement (100) selon l'une quelconque des revendications 1 à 7 ;
- le premier axe (201), adapté pour être logé avec sa première extrémité dans la partie inférieure (110) du manchon de roulement (100) ;
- le deuxième axe (202), adapté pour être logé avec sa première extrémité dans la partie supérieure (130) du manchon de roulement (100) ;

9. Système de roulement (200) selon la revendication 8, dans lequel le deuxième axe (202) est adapté pour être placé avec sa deuxième extrémité dans une plaque d'étanchéité (302) d'un débitmètre (300).

10. Système de roulement (200) selon la revendication 9, dans lequel le premier axe (201) est adapté pour être assis avec sa deuxième extrémité dans un corps (306) du débitmètre (300).

11. Système de roulement (200) selon les revendications 8 à 10, dans lequel le premier axe (201) et/ou le second axe (202) sont en acier inoxydable ou en carbures frittés, ou en alliages de cobalt.

12. Débitmètre (300) comprenant le système de roulement (200) selon l'une quelconque des revendications 8 à 11.

13. Débitmètre (300) selon la revendication 12, adapté pour mesurer le débit d'eau ou de gaz.
